# EUROPEAN PATENT SPECIFICATION

(11) **EP 4 564 198 B1**
(45) Date of publication and mention of the grant of the patent: **07.10.2026**
(21) Application number: 23849487.6
(22) Date of filing: 03.08.2023
(51) Int. Cl.: G06F 21/16, G06F 21/10, H04L 9/14, H04L 9/32, H04N 21/8358

(54) **METHOD AND SYSTEM FOR PROCESSING DIGITAL CONTENT, METHOD AND SYSTEM FOR CONFIRMING COPYRIGHTS OF DIGITAL CONTENT, AND METHOD AND SYSTEM FOR TRACING DIGITAL CONTENT**
VERFAHREN UND SYSTEM ZUR VERARBEITUNG VON DIGITALEM INHALT, VERFAHREN UND SYSTEM ZUR BESTÄTIGUNG VON URHEBERRECHTEN VON DIGITALEM INHALT SOWIE VERFAHREN UND SYSTEM ZUR VERFOLGUNG VON DIGITALEM INHALT
PROCÉDÉ ET SYSTÈME DE TRAITEMENT DE CONTENU NUMÉRIQUE, PROCÉDÉ ET SYSTÈME DE CONFIRMATION DES DROITS D'AUTEUR D'UN CONTENU NUMÉRIQUE, ET PROCÉDÉ ET SYSTÈME DE SUIVI DE CONTENU NUMÉRIQUE

(30) Priority: 05.08.2022 CN 202210939019
(43) Date of publication of application: 04.06.2025
(73) Proprietor: Huawei Technologies Co., Ltd., Shenzhen, Guangdong 518129 (CN)
(72) Inventor: ZHOU, Haibo, Shenzhen, Guangdong 518129 (CN); HU, Ziyuan, Shenzhen, Guangdong 518129 (CN); HU, Peizhao, Shenzhen, Guangdong 518129 (CN)
(74) Representative: Maiwald GmbH
(86) International application number: PCT/CN2023/110895
(87) International publication number: WO 2024/027783

(56) References cited:
- EP-A1- 0 905 967
- WO-A1-2012/088663
- CN-A- 101 729 256
- CN-A- 103 996 165
- CN-A- 113 506 580
- US-A1- 2004 101 160
- US-B2- 8 010 804

## Description

### TECHNICAL FIELD

This application relates to the field of digital content copyright protection technologies, and in particular, to a method and a system for processing digital content, a method and a system for confirming a copyright of digital content, and a method and a system for tracing digital content.

### BACKGROUND

In today's society, with increasing value of digital content (such as pictures, videos, and 3D models), copyright protection for digital content becomes increasingly important. The copyright market in China is growing rapidly. With development of digital science and technologies, digital content, such as short videos, long videos, livestreaming, internet news, and digital pictures, significantly increases, and a proportion of digital content copyrights greatly increases. With growth of the digital content copyright market, copyright issues of digital content become increasingly serious. In addition, it is difficult to collect evidence or confirm a copyright in most infringement cases, leading to inefficient handling of the infringement cases.

A digital watermarking technology is faced with security challenges. Digital watermarking is one of technologies for implementing strong binding between digital content and copyright information. A watermark including copyright information is embedded into digital content to confirm a copyright. A thief usually forges a key to extract a watermark from digital content to steal a copyright of the digital content. Reliability of verifying a copyright of digital content through watermark extraction is low, leading to difficulty in confirming a copyright of digital content. CN103996165A provides a digital image zero watermark embedding and extracting method based on compressed sensing characteristics and belongs to the technical field of information hiding and image processing. The method comprises the following steps of carrying out zero watermark embedding on an initial carrier image, registering a generated zero watermark in an IPR information database and saving a measurement matrix as a secret key, and carrying out zero watermark extracting on a digital image with validity to be verified. The digital image zero watermark embedding and extracting method uses an idea of zero watermark, achieves of zero watermark embedding and extracting based on the compressed sensing characteristics of the initial carrier image, prevents any information of the initial carrier image from being changed in a zero watermark embedding process and effectively solves the contradiction between invisibility and robustness. The information is hidden into a compressed sensing domain of the image, so that the information has excellent compression resistance, can resist to all kinds of noise attack, large-scale shearing attack and rotation attack and can resist to robustness of various kinds of image operation.

### SUMMARY

Embodiments of this application provide a method and a system for processing digital content, a method and a system for confirming a copyright of digital content, and a method and a system for tracing digital content. A key is bound, and a watermark is embedded into digital content based on a bound key. Only a pre-binding key is provided for a verifier. A thief forges a bound key to extract the watermark, but cannot obtain the pre-binding key. Whether the digital content is stolen may be determined based on the pre-binding key. This improves reliability of verifying a copyright of digital content through watermark extraction.

According to a first aspect, this application provides a method for processing digital content, including: obtaining digital content; performing feature extraction on the digital content to obtain a digital content feature; generating an intermediate key based on at least the digital content feature and secret information of a user; binding at least the intermediate key to obtain an encryption key; and embedding a watermark into the digital content based on the encryption key.

Feature extraction is performed on the digital content, and a key is generated based on the secret information of the user. When the digital content is stolen, a feature may be directly extracted from the stolen digital content. Whether the digital content is stolen may be determined based on the secret information of the user. When a key is submitted to a verifier, the intermediate key may be provided alone. A thief forges an encryption key to extract the watermark, but cannot obtain the intermediate key. Whether the digital content is stolen may be determined based on the intermediate key. This can also improve reliability of verifying a copyright of digital content through watermark extraction. When there is a large amount of media content, a user may locally store only secret information, without storing other intermediate keys or encryption keys. This reduces a local storage amount of the user.

In another possible implementation, the intermediate key includes a first intermediate key and a second intermediate key, and the encryption key includes a first encryption key and a second encryption key. The first intermediate key is obtained based on at least a first digital content feature and first secret information. The second intermediate key is obtained based on at least a second digital content feature and second secret information. The first encryption key is obtained based on at least the first intermediate key. The second encryption key is obtained based on at least the second intermediate key. The first encryption key is used to determine an embedding location for the watermark in the digital content. The second encryption key is used to encrypt the watermark.

In a possible implementation, the digital content feature includes a first digital content feature and a second digital content feature, and the secret information of the user includes first secret information and second secret information. The generating an intermediate key based on at least the digital content feature and secret information of a user includes: obtaining a first intermediate key based on the first digital content feature and the first secret information, and obtaining a second intermediate key based on the second digital content feature and the second secret information.

The binding at least the intermediate key to obtain an encryption key includes: binding at least the first intermediate key to obtain a first encryption key, and binding at least the second intermediate key to obtain a second encryption key.

The embedding a watermark into the digital content based on the encryption key includes:
determining an embedding location for the watermark in the digital content based on the first encryption key, encrypting the watermark based on the second encryption key, and embedding an encrypted watermark into the embedding location in the digital content.

In a possible implementation, the encryption key is further obtained through binding based on user information.

In a possible implementation, the method for processing digital content includes: obtaining digital content data, where the digital content data includes digital content and copyright information corresponding to the digital content; performing feature extraction on the digital content to obtain feature information of the digital content, where the feature information includes a first feature code and a second feature code; generating a first subkey and a second subkey based on a private key of a user, the first feature code, and the second feature code; outputting an embedding key and a scrambling key by using the first subkey and the copyright information of the digital content, and the second subkey and the copyright information of the digital content as input for a one-way function respectively; and embedding a copyright watermark into the digital content in a hidden manner based on the scrambling key and the embedding key to obtain digital content embedded with the copyright watermark.

For example, the copyright watermark is scrambled based on the scrambling key and a scrambling algorithm, where the copyright watermark includes the copyright information of the digital content; an embedding location is determined based on the embedding key and the scrambling algorithm, where the embedding location indicates a location at which a scrambled copyright watermark is embedded into the digital content; and the scrambled copyright watermark is embedded into the embedding location to obtain the digital content embedded with the copyright watermark.

According to the method for processing digital content in this embodiment of this application, a copyright watermark including copyright information is embedded into digital content, so that strong binding between the copyright information and the digital content is implemented, and the copyright watermark can also resist an interpretation attack. This improves robustness of the copyright watermark.

Optionally, the one-way function is a hash function. The hash function may compress input with any length into output with a fixed length, to save storage space. In addition, the hash function is irreversible and unidirectional. This ensures password security.

In a possible implementation, the feature information includes a singular-value feature code, and the first feature code and the second feature code are respectively a first singular-value feature code and a second singular-value feature code that are obtained through extraction based on the singular-value feature code.

In another possible implementation, the generating a first subkey and a second subkey based on a private key of a user, the first feature code, and the second feature code includes: outputting the first subkey by using the private key of the user and the first feature code as input for a key derivation algorithm; and outputting the second subkey by using the private key of the user and the second feature code as input for the key derivation algorithm.

For the key derivation algorithm, an appropriate key derivation algorithm, for example, a standard encryption algorithm AES or a hash HASH algorithm, may be selected based on an actual case. This is not limited in this embodiment of this application.

In another possible implementation, the method further includes: binding the digital content embedded with the copyright watermark to an evidence watermark, where the evidence watermark includes the copyright information of the digital content.

In this possible implementation, the evidence watermark is further added based on the digital content embedded with the copyright watermark. This implements a dual-watermark setting, and ensures a capability of confirming a copyright of information of the digital content itself when the copyright watermark is subject to an attack that exceeds an upper limit of robustness of the copyright watermark. This provides an additional guarantee for confirming a copyright of the digital content.

In another possible implementation, the binding the digital content embedded with the copyright watermark to an evidence watermark includes: performing digest calculation on the digital content embedded with the copyright watermark to determine a first digest; and signing the first digest and the copyright information based on the private key of the user to determine a first signature. In this way, the evidence watermark is bound to the digital content.

In this possible implementation, the evidence watermark is bound to a digest of the digital content based on the private key of the user, to implement strong binding between the evidence watermark and the digital content, avoid a decoupling attack, and improve robustness of the evidence watermark.

In an example, the evidence watermark further includes the first signature, a second signature, and a timestamp. The second signature is obtained by signing, by a copyright registration authority, the first signature, the copyright information, and the timestamp after signature verification on the first signature succeeds. The timestamp includes information about time at which the copyright registration authority completes the second signature.

In another possible implementation, the first digest is a hash value of the digital content embedded with the copyright watermark.

According to a second aspect, an embodiment of this application further provides a method for confirming a copyright of digital content. A verifier obtains an intermediate key. The verifier binds at least the intermediate key to obtain an encryption key. The verifier extracts, by using the encryption key, a to-be-verified copyright watermark from digital content embedded with a copyright watermark. The verifier determines ownership of the digital content based on the to-be-verified copyright watermark.

In another possible implementation, an attester provides a first subkey, a second subkey, and copyright information for a verifier. The verifier outputs an embedding key and a scrambling key by using the first subkey and the copyright information, and the second subkey and the copyright information as input for a one-way function respectively. The verifier extracts, based on the embedding key and the scrambling key, a copyright watermark from digital content embedded with the copyright watermark, where the digital content embedded with the copyright watermark is obtained through processing by using the method according to the first aspect. The verifier determines ownership of the digital content based on the copyright watermark.

In this possible implementation, a method for confirming a copyright of digital content is provided. A copyright watermark is extracted from digital content that carries the copyright watermark and that is obtained through processing by using the method according to the first aspect. The copyright watermark embedding scheme in the method according to the first aspect has high robustness, and an interpretation attack can be prevented. Therefore, it is ensured that the copyright watermark can be extracted. Then copyright information of the digital content is obtained, and copyright confirmation is performed based on the copyright information. This ensures reliability of the copyright confirmation.

In another possible implementation, the method for confirming a copyright of digital content further includes: The verifier extracts no copyright watermark from the digital content embedded with the copyright watermark. In this case, the verifier obtains an evidence watermark. The verifier extracts copyright information from the evidence watermark.

The verifier determines ownership of the content based on the copyright information.

To be specific, when an attack attempted by an attacker against digital content exceeds an upper limit of robustness and a copyright consequently cannot be confirmed based on copyright watermark content obtained by running a watermark extraction algorithm, if evidence watermark information carried in the digital content is not modified, an evidence watermark can be verified, and copyright information can be extracted from the evidence watermark, it can be proved that the digital content held by the attacker is stolen digital content. In other words, in this possible implementation, dual watermarks are set to ensure a capability of confirming a copyright of information of digital content itself when a copyright watermark is subject to an attack that exceeds an upper limit of robustness of the copyright watermark. This provides an additional guarantee for confirming a copyright of the digital content.

In another possible implementation, that the verifier extracts copyright information from the evidence watermark includes: The verifier extracts a first signature, the copyright information, a timestamp, and a second signature from the evidence watermark. The verifier performs signature verification on the first signature and the second signature, and if the signature verification succeeds, extracts the copyright information from the evidence watermark. This further ensures security of information in the evidence watermark through signature verification.

In another possible implementation, the evidence watermark includes a plurality of evidence watermarks extracted from digital content uploaded by parties related to a copyright dispute about the digital content, and ownership of the digital content is further related to timestamps in the evidence watermarks.

For example, when the evidence watermark is also attacked, to be specific, no copyright information can be extracted from the evidence watermark, the parties related to the copyright dispute need to upload the digital content. The evidence watermarks are respectively extracted from the digital content uploaded by the parties related to the copyright dispute. The timestamps are extracted from the evidence watermarks corresponding to the digital content uploaded by the parties related to the copyright dispute. Evidence storage time of the digital content of the parties related to the copyright dispute is determined based on the timestamps. It is determined that a user corresponding to digital content with earlier evidence storage time is a copyright owner of the digital content.

In other words, if an evidence watermark of digital content is also modified, a user needs to provide original digital content that carries an evidence watermark and that has a copyright conflict, and a copyright is confirmed based on evidence information and evidence storage time. This further provides a guarantee for confirming the copyright of the digital content.

According to a third aspect, an embodiment of this application further provides a method for processing digital content, including: obtaining digital content embedded with a copyright watermark; and binding a tracing credential to the digital content. The tracing credential includes tracing information and a verifiable credential. The tracing information is metadata related to the digital content, and includes a digest of the digital content or the like as a basic material for tracing. The verifiable credential is a signature obtained by signing a digest of the tracing information based on a private key of a user.

In this possible implementation, the copyright watermark is embedded into the digital content to implement strong binding between a copyright and the digital content, and the tracing credential is bound to the digital content based on a signature key of the user. Therefore, the copyright information, the tracing credential, and the digital content are bound, and an attacker cannot unbind them. Even if the digital content is stolen, a supervisor can easily determine copyright ownership and determine an original thief through tracing based on the copyright information and the tracing credential.

In another possible implementation, the binding a tracing credential to the digital content includes: determining the tracing information based on the digest of the digital content; and signing the tracing information based on the private key of the user, to determine the verifiable credential.

In another possible implementation, the tracing information further includes at least one of a preview of the digital content and an identity of the user, and the user is a copyright owner or a grantee of the digital content.

In this possible implementation, the tracing information further includes the preview of the digital content and the identity of the user, so that the user can learn of partial information of the digital content based on the tracing information. This improves user experience.

In another possible implementation, the tracing information further includes authorization information, and the authorization information includes an authorization credential and an authorization signature. The authorization credential proves that authorization on the digital content is obtained. The authorization signature is obtained by signing the authorization credential by a copyright owner of the digital content.

In another possible implementation, the tracing credential includes a first tracing credential and a second tracing credential. The first tracing credential is generated for a copyright owner of the digital content. The second tracing credential is generated for a grantee of the digital content or for processing the digital content. The second tracing credential includes a digest of the first tracing credential.

In another possible implementation, the digital content embedded with the copyright watermark is obtained through processing by using the method according to the first aspect.

According to a fourth aspect, an embodiment of this application further provides a method for tracing digital content, including: obtaining digital content, where the digital content is obtained through processing by using the method according to the third aspect; determining, based on the digital content, a tracing credential bound to the digital content; and performing tracing on the digital content based on the tracing credential.

According to a fifth aspect, an embodiment of this application further provides a system for confirming a copyright of digital content and tracing the digital content, including at least a feature extraction module, a detection module, a copyright confirmation module, a tracing module, and a processing module. The feature extraction module is configured to extract a feature of digital content. The detection module is configured to compare the extracted feature of the digital content with a feature in a feature database to determine whether the feature database includes a feature similar to the feature of the digital content. The copyright confirmation module is configured to extract copyright information of the digital content, and determine ownership of the digital content based on the copyright information. The tracing module is configured to extract a tracing credential of the digital content, and trace the digital content based on the tracing credential to determine infringing digital content. The processing module is configured to perform corresponding handling on an owner of the infringing digital content, and/or remove digital content from a trust chain to which the infringing digital content belongs.

In this possible implementation, a system for confirming a copyright of digital content and tracing the digital content is provided. This ensures both a capability of confirming a copyright of digital content and a capability of tracing (for example, determining an original thief through tracing) after the copyright confirmation.

In a possible implementation, the digital content is obtained through processing by using the method according to the first aspect and/or the method according to the third aspect. After the digital content is processed by using the method according to the first aspect and/or the method according to the third aspect, a capability of confirming a copyright of the digital content and traceability of the digital content are improved.

In a possible implementation, the copyright information includes a copyright watermark and/or an evidence watermark corresponding to the digital content. A dual-watermarking scheme is used to further ensure a capability of confirming a copyright of the digital content.

In a possible implementation, the system for confirming a copyright of digital content and tracing the digital content further includes a digital content generation and upload module, configured to: process the digital content by using the method according to the first aspect and/or the method according to the third aspect; perform verification on processed digital content; and upload the processed digital content to the system if the verification succeeds. The digital content generation and upload module in the system enables the system to automatically embed the copyright watermark into the digital content, and implements strong binding between the evidence watermark and the digital content and strong binding between the digital content and the tracing credential, to ensure a capability of confirming a copyright of the digital content and cross-platform copyright confirmation and tracing. In addition, the digital content generation and upload module verifies the digital content during uploading of the digital content to ensure correctness of generation of the digital content.

In a possible implementation, the system for confirming a copyright of digital content and tracing the digital content further includes an authorization and trust chain establishment module, configured to: generate authorization information in response to an authorization request; process re-created digital content by using the method according to the first aspect and/or the method according to the third aspect to determine second digital content data; and determine third digital content data based on the authorization information and the second digital content data.

Optionally, the authorization information includes an authorization credential and an authorization signature.

According to the system for confirming a copyright of digital content and tracing the digital content in this embodiment of this application, the following problem is resolved: Media platforms use different evidence storage systems, and a copyright cannot be confirmed when digital content is stolen across platforms. The system can accurately confirm a copyright across platforms based on double guarantees of a copyright watermark and an evidence watermark, provided that a qualified copyright registration authority is used. Based on a trust chain mechanism, an original copyright thief is accurately determined through tracing, and an entire infringement chain is identified. The copyright registration authority is responsible only for registration and does not participate in copyright confirmation querying, and therefore has small computing load. Based on a copyright watermarking scheme, in most scenarios, the system can still provide copyright evidence for disputes on copyrights that are not registered with a same copyright registration authority, to confirm a copyright.

According to a sixth aspect, an embodiment of this application provides a computing device, including a memory and a processor. The memory stores instructions. When the instructions are executed by the processor, the method according to the first aspect and/or the method according to the second aspect and/or the method according to the third aspect and/or the method according to the fourth aspect are implemented.

According to a seventh aspect, an embodiment of this application provides a computer-readable storage medium. The computer-readable storage medium stores a computer program. When the computer program is executed by a processor, the method according to the first aspect and/or the method according to the second aspect and/or the method according to the third aspect and/or the method according to the fourth aspect are implemented.

According to an eighth aspect, an embodiment of this application further provides a computer program or a computer program product. The computer program or the computer program product includes instructions. When the instructions are executed, a computer is enabled to perform the method according to the first aspect and/or the method according to the second aspect and/or the method according to the third aspect and/or the method according to the fourth aspect.

According to a ninth aspect, an embodiment of this application further provides a chip, including at least one processor and a communication interface. The processor is configured to perform the method according to the first aspect and/or the method according to the second aspect and/or the method according to the third aspect and/or the method according to the fourth aspect.

### BRIEF DESCRIPTION OF DRAWINGS

FIG. 1(a) is a flowchart of a method for processing digital content according to an embodiment of this application;
FIG. 1(b) is a flowchart of a method for processing digital content according to an embodiment of this application;
FIG. 2(a) is a diagram of a process of embedding a copyright watermark into digital content by using a method for processing digital content according to an embodiment of this application;
FIG. 2(b) is a diagram of a process of embedding a copyright watermark into digital content by using a method for processing digital content according to an embodiment of this application;
FIG. 3 is a diagram of an implementation process of a dual-watermarking scheme for digital content;
FIG. 4 is a diagram of a process of extracting a copyright watermark by a verifier;
FIG. 5 is a diagram of binding digital content, copyright information, and a tracing credential;
FIG. 6 is a diagram of complete digital content data obtained by packaging digital content embedded with a copyright watermark, a tracing credential, and an evidence watermark;
FIG. 7 is a diagram of an architecture of a system for confirming a copyright of digital content and tracing the digital content according to an embodiment of this application;
FIG. 8 is a diagram of generating and reviewing digital content in a system for confirming a copyright of digital content and tracing the digital content according to an embodiment of this application;
FIG. 9 is a schematic flowchart of confirming a copyright of digital content and tracing the digital content in a system for confirming a copyright of digital content and tracing the digital content according to an embodiment of this application;
FIG. 10 is a diagram of generating and uploading digital content in a system for confirming a copyright of digital content and tracing the digital content according to an embodiment of this application;
FIG. 11 is a diagram of establishing a digital content authorization and trust chain on a system for confirming a copyright of digital content and tracing the digital content according to an embodiment of this application;
FIG. 12 is a diagram of copyright confirmation and tracing for a copyright dispute found through fingerprint detection in a system for confirming a copyright of digital content and tracing the digital content according to an embodiment of this application;
FIG. 13 is a diagram of copyright confirmation and tracing for a copyright dispute resulting from reporting by a user in a system for confirming a copyright of digital content and tracing the digital content according to an embodiment of this application; and
FIG. 14 is a diagram of a structure of a computing device according to an embodiment of this application.

### DESCRIPTION OF EMBODIMENTS

The following further describes technical solutions of this application in detail with reference to accompanying drawings and embodiments.

Embedding copyright information into digital content in a form of a digital watermark is a manner of strong binding for a digital copyright. A security design and a robustness study for a watermarking scheme are two core directions. Robustness is usually a capability of a watermarking scheme to resist malicious watermark removal under different signal processing attacks. Different watermarking schemes have different attack resistance capabilities. Security is a capability of a watermarking scheme to resist watermark removal attacks when the watermarking scheme is disclosed. A security design for a watermark is a necessary capability of the watermark as a copyright protection means.

In addition, with increasing value of digital content, massive re-creation and propagation are performed based on digital content, and various copyright infringements are likely to occur. In actual application, a complete system for confirming a copyright of digital content and tracing the digital content needs to be used to identify a propagation process of the digital content and trace the entire process to find a malicious participant in the process, to resolve various copyright issues related to propagation and re-creation of the digital content.

However, some conventional copyright protection technologies have the following problems:
1. A digital watermarking technology is faced with security challenges. Digital watermarking is one of technologies for implementing strong binding between digital content and copyright information. A watermark including copyright information is embedded into digital content to confirm a copyright. Although watermark embedding schemes for different types of digital content may vary, a watermark embedding scheme needs to be disclosed when used for copyright protection, and a key needs to be submitted for copyright verification. Therefore, in addition to attacks against robustness, a digital watermark may be further subject to risks of key leakage and forged-key-based interpretation attacks.
2. An evidence-based copyright confirmation mode is prone to attacks. Because a hash algorithm is collision-resistant, storing a hash value of digital content as evidence in a credible copyright protection system is a means of copyright confirmation. However, copyright confirmation based on hash evidence cannot resist tampering attacks. An attacker may steal digital content from another user and tamper with the digital content to some extent. In this case, a copyright cannot be confirmed.
3. A conventional copyright protection system cannot ensure, at the same time, a capability of confirming a copyright of digital content and a capability of determining an original thief through tracing after the copyright confirmation.

Embodiments of this application provide a method and a system for processing digital content, a method and a system for confirming a copyright of digital content, and a method and a system for tracing digital content. The system is capable of identifying a copyright conflict, providing full-cycle copyright confirmation for data across platforms, and determining an original thief and a related benefit chain through tracing.

Currently, copyright theft related to digital content occurs in many scenarios. For example, in a decoupling attack scenario, a thief steals digital content and disguises the digital content as a copyright asset of the thief to generate complete digital content information. In a scenario of a cross-platform copyright dispute, a thief steals digital content of a copyright owner from a platform B, generates a related list and additional information, and then publishes the list and the additional information on a platform A. After a plurality of times of authorized creation, even if the copyright owner discovers and reports the digital content, it is still difficult for the platform A to determine copyright ownership of the digital content.

A method for resisting such decoupling attacks is to implement strong binding between copyright information and digital content, to prevent a thief from clearing all copyright-related information when stealing the digital content. A common solution is to add a digital watermark to digital content to bind the digital content to copyright information, and use a key to hide watermark information. However, an embedding process of a watermarking scheme is usually a simple calculation operation and is reversible. Therefore, a forged-key-based interpretation attack is likely to occur. Some information is extracted from digital content based on a forged key, and then a key value is adjusted to interpret the information as a watermark sign of an attacker. In addition, key leakage may occur during implementation of the watermarking scheme. In addition, a malicious modification on digital content may cause inability to extract a copyright watermark from the digital content, or inability to confirm a copyright based on an extracted watermark. Embodiments of this application provide a watermarking scheme for resisting interpretation attacks and avoiding key leakage, to resolve a problem that a copyright cannot be confirmed due to a destroy attack.

A supervisor may confirm a copyright of digital content based on binding between the digital content and copyright information. However, a tracing credential related to the digital content still needs to be used for determining an original thief through tracing. Therefore, based on the digital watermarking scheme for copyright protection, embodiments of this application provide a solution for binding digital content, copyright information, and a tracing credential. In this solution, a copyright watermark is embedded into digital content to implement strong binding between a copyright and the digital content, and an evidence watermark and a tracing credential are separately bound to the digital content based on a signature key of a user. In this way, copyright information is associated with each other, and the copyright information and the tracing credential are bound to the digital content.

Embodiments of this application also provide a full-cycle, efficient, and complete system for confirming a copyright of digital content and tracing the digital content. The system includes three parts: a digital content fingerprint extraction and query system for copyright dispute detection, a watermark generation and authentication system for copyright confirmation in a copyright dispute, and an authorization and trust chain mechanism for determining an original thief through tracing. This ensures integrity and security of full-cycle copyright information protection and authorization for digital content in the system, provides a capability of tracing after copyright confirmation, and also avoids a risk of copyright theft such as decoupling attacks.

The following describes in detail a plurality of solutions for digital content in embodiments of this application. An embodiment of this application provides a method for processing digital content. A copyright watermark including copyright information of digital content is embedded into the digital content, to implement strong binding between the copyright information and the digital content.

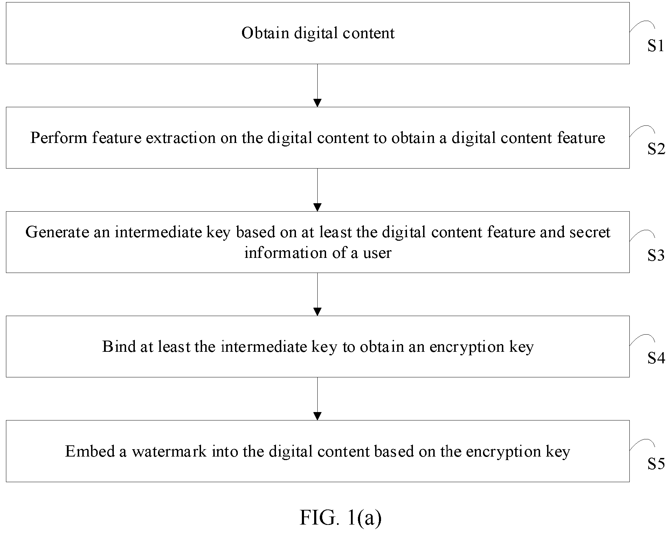

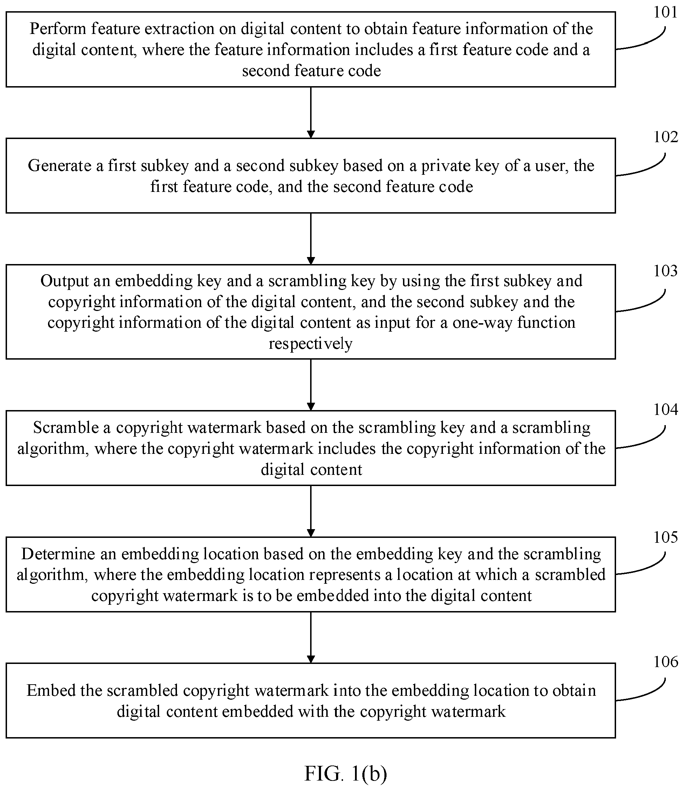

FIG. 1(a) and FIG. 1(b) each are a flowchart of a method for processing digital content according to an embodiment of this application. The method may be performed by any apparatus, device, platform, or device cluster with a computing capability. A specific computing device for performing the method is not specifically limited in this embodiment of this application, and an appropriate computing device may be selected according to a requirement to perform the method.

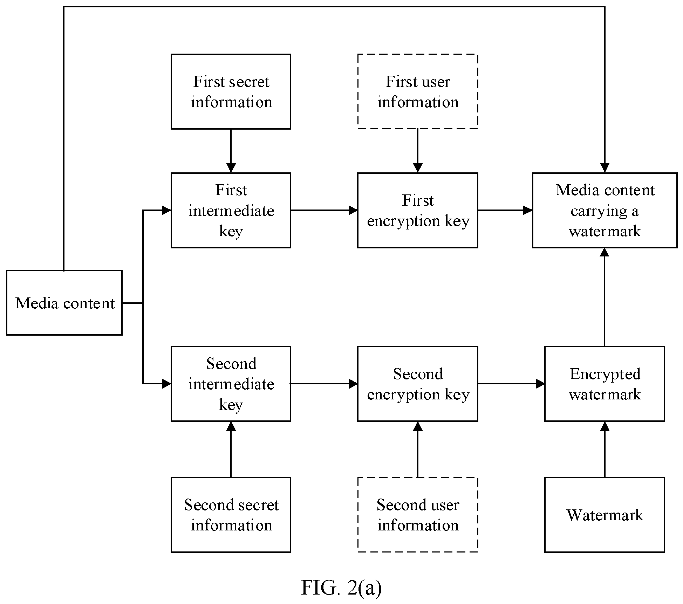

As shown in FIG. 1(a) and FIG. 2(a), the method for processing digital content includes at least steps S10 to S60.

Step S1: Perform feature extraction on digital content to obtain a digital content feature.

The digital content is text, an image, sound, a video, or other content that exists in a digital form. The digital content may be stored in a digital carrier such as a compact disc or a hard disk drive, and propagated through a network or in other means.

The digital content feature may be a digital fingerprint feature, a singular-value feature, or other stable features, so that a same feature can still be extracted after the digital content is watermarked or attacked.

A feature of the digital content may be extracted by using a plurality of methods. For example, a feature of the digital content is extracted by using a machine learning method, or a feature of the digital content is extracted by using a preset extraction rule.

For example, the digital content is input to a trained feature extraction model, and a feature of the digital content is output. Alternatively, an operator is obtained by summarizing a large amount of priori knowledge, and a feature of the digital content is extracted by using the operator. Alternatively, a singular value of the digital content is calculated, and a feature code of the digital content is extracted from the singular value, where the feature code is used as a feature of the digital content.

It should be noted that, a specific feature extraction method for the digital content is not limited in this application, and an appropriate feature extraction method may be selected according to an actual requirement.

There may be one or more digital content features. In an embodiment, the digital content feature includes a first digital content feature and a second digital content feature. The first digital content feature and the second digital content feature may be a same feature or different features.

Step S2: Generate an intermediate key based on at least the digital content feature and secret information of a user.

In some embodiments, the secret information of the user may be a private key of the user, a random number locally generated by the user, or other private information of the user. The secret information of the user is locally stored by the user. During copyright verification, the user needs to submit the secret information to a verifier.

In an embodiment, the intermediate key may be generated based on a key generation algorithm, and the intermediate key is output by using both the secret information of the user and the digital content feature as input for the key generation algorithm. The intermediate key may also become a subkey.

In an embodiment, the intermediate key is generated based on copyright information of the digital content, the digital content feature, and the secret information of the user. The intermediate key may be output by using all of the copyright information of the digital content, the digital content feature, and the secret information of the user as input for the key generation algorithm. Copyright information IC is information that can clearly indicate copyright ownership, for example, an ID of a user (copyright owner) or a public key of a user, or other content that can describe copyright ownership.

There may be one or more intermediate keys. In an embodiment, the intermediate key includes a first intermediate key and a second intermediate key. The first intermediate key is obtained based on at least the first digital content feature and first secret information. The second intermediate key is obtained based on at least the second digital content feature and second secret information. In an embodiment, the first secret information and the second secret information may be same or different secret information. For example, the first secret information and the second secret information may be the private key of the user.

In an embodiment, the first intermediate key may be output by using the first digital content feature and the first secret information as input for a first key generation algorithm, and the second intermediate key may be output by using the second digital content feature and the second secret information as input for the first key generation algorithm. To be specific, the generating an intermediate key based on at least the digital content feature and secret information of a user includes: obtaining the first intermediate key based on the first digital content feature and the first secret information, and obtaining the second intermediate key based on the second digital content feature and the second secret information, where the first key generation algorithm and a second key generation algorithm may be the same or different, for example, the key generation algorithm may be any key derivation algorithm, for example, a standard encryption algorithm AES or a hash HASH algorithm, and the user may select an appropriate key derivation algorithm according to an actual requirement; outputting the first intermediate key by using the first secret information and the first digital content feature as input for the key derivation algorithm; and outputting the second intermediate key by using the second secret information and the second digital content feature as input for the key derivation algorithm.

Step S3: Bind at least the intermediate key to obtain an encryption key.

The binding is a processing method for preventing the intermediate key from being forged. Encrypted data may be obtained through binding on intermediate data, but the intermediate data cannot be obtained through reverse processing on the encrypted data. For example, the intermediate data is processed by using a one-way function. In an embodiment, the intermediate key may be hashed to obtain an encryption key, and the encryption key is a hash value of the intermediate key.

In an embodiment, an encryption key may be obtained through binding on both the intermediate key and user information. To be specific, the user information is added during binding, and the encryption key may be output by using both the user information and the intermediate key as input for a one-way function. In other words, the encryption key may be obtained based on the intermediate key and the user information. For example, the encryption key may be a hash value of data obtained by combining the intermediate key and the user information, or the encryption key may be data obtained by combining a hash value of the intermediate key and a hash value of the user information, or the encryption key may be a hash value of data obtained by combining a hash value of the intermediate key and a hash value of the user information. The user information may be the copyright information of the digital content.

In an embodiment, the encryption key includes a first encryption key and a second encryption key, the first encryption key is obtained based on at least the first intermediate key, and the second encryption key is obtained based on at least the second intermediate key. To be specific, the binding at least the intermediate key includes: binding at least the first intermediate key to obtain the first encryption key, and binding at least the second intermediate key to obtain the second encryption key. The binding on the first intermediate key and the second intermediate key is not described in detail herein again. In an embodiment, the first encryption key may be an embedding key, and the second encryption key may be a scrambling key.

Step S4: Embed a watermark into the digital content based on the encryption key.

In an embodiment, the watermark may be encrypted by using the encryption key, and then an encrypted watermark is embedded into the digital content. In an embodiment, an embedding location for the watermark in the digital content may be encrypted by using the encryption key. In an embodiment, both the embedding location for the digital content and the watermark may be encrypted.

In an embodiment, the watermark includes information indicating a user identity, for example, a personal ID, a user identifier, a logo, a pattern, or other information that can indicate the user identity, and may also be referred to as copyright information or a copyright watermark.

In an embodiment, the first encryption key is used to determine an embedding location for the watermark in the digital content, and the second encryption key is used to encrypt the watermark. To be specific, the embedding a watermark into the digital content based on the encryption key includes: determining an embedding location for the watermark in the digital content based on the first encryption key, encrypting the watermark based on the second encryption key, and embedding an encrypted watermark into the embedding location in the digital content.

Feature extraction is performed on the digital content, and a key is generated based on the secret information of the user. When the digital content is stolen, a feature may be directly extracted from the stolen digital content. Whether the digital content is stolen may be determined based on the secret information of the user. When a key is submitted to a verifier, a bound intermediate key may be provided alone. A thief forges an encryption key to extract the watermark, but cannot obtain the intermediate key. The verifier calculates an encryption key based on the intermediate key and checks whether the encryption key is the same as the forged encryption key to determine whether the digital content is stolen. When there is a large amount of media content, a user may locally store only secret information, without storing other intermediate keys or encryption keys. This reduces a local storage amount of the user.

As shown in FIG. 1(b), in an embodiment, the method for processing digital content includes at least steps S101 to S106.

Step S101: Perform feature extraction on digital content to obtain feature information of the digital content, where the feature information includes a first feature code and a second feature code.

Interpretation of the digital content and the feature extraction is the same as the interpretation of the terms in FIG. 1(a). The feature information is the same as the digital content feature in the foregoing embodiment. The first feature code and the second feature code are extracted from the digital content feature. For example, the digital content feature is a feature code extracted from a singular value of the digital content, and may also be referred to as a singular-value feature code. Feature codes at different locations in the singular-value feature code (for example, a first one-third part and a last one-third part of the singular-value feature code) are separately extracted as the first feature code FC1 and the second feature code FC2 according to a preset rule.

Step S102: Generate a first subkey and a second subkey based on a private key of a user, the first feature code, and the second feature code.

The first subkey Subkey1 is output by using the FC1 and the private key SK of the user as input for a key derivation algorithm KEY_GEN. For example, Subkey1=KEY_GEN(SK, FC1). The second subkey Subkey2 is output by using the FC2 and the private key SK of the user as input for the key derivation algorithm KEY_GEN. For example, Subkey2=KEY_GEN(SK, FC2). The key derivation algorithm KEY_GEN may be any key derivation algorithm, for example, a standard encryption algorithm AES or a hash HASH algorithm. The user may select an appropriate key derivation algorithm according to an actual requirement.

Step S103: Output an embedding key and a scrambling key by using the first subkey and copyright information of the digital content, and the second subkey and the copyright information of the digital content as input for a one-way function respectively.

The first subkey Subkey1 and the copyright information IC of the digital content are input to the one-way function, for example, a HASH function, namely, HASH(IC∥Subkey1), to obtain the embedding key. The second subkey Subkey2 and the copyright information IC of the digital content are input to the one-way function, for example, a HASH function, namely, HASH(IC∥Subkey2), to obtain the scrambling key.

It can be understood that the copyright information IC is information that can clearly indicate copyright ownership, for example, an ID of a user (copyright owner) or a public key of a user, or other content that can describe copyright ownership. The copyright information may also be referred to as a watermark.

Step S104: Scramble a copyright watermark based on the scrambling key and a scrambling algorithm, where the copyright watermark includes the copyright information of the digital content.

For example, a scrambling sequence of the copyright watermark is calculated by using the scrambling key and the scrambling algorithm, and the copyright watermark is scrambled based on the scrambling sequence. In this way, scrambling encryption is performed on the copyright watermark to obtain an encrypted copyright watermark that needs to be embedded.

The scrambling algorithm may be one of a plurality of scrambling algorithms in chaotic maps, for example, a logistic map and a shear map, or may be another appropriate scrambling algorithm. This is not limited in this embodiment of this application.

Step S105: Determine an embedding location based on the embedding key and the scrambling algorithm, where the embedding location represents a location at which a scrambled copyright watermark is to be embedded into the digital content.

Frequency domain transform is performed on the digital content to obtain a frequency domain coefficient matrix corresponding to the digital content, and an embedding location for the copyright watermark in the frequency domain coefficient matrix is calculated by using the embedding key and the scrambling algorithm (for example, the logistic map).

Frequency domain transform may be performed on the digital content in a plurality of manners, for example, discrete cosine transform (Discrete Cosine Transform, DCT) or discrete Fourier transform.

Step S106: Embed the scrambled copyright watermark into the embedding location to obtain digital content embedded with the copyright watermark.

The copyright watermark is embedded, based on a watermark embedding algorithm, into the calculated embedding location in the frequency domain coefficient matrix corresponding to the digital content, and then inverse frequency domain transform is performed to obtain the digital content embedded with the copyright watermark.

There are a plurality of watermark embedding algorithms, such as a quantization index modulation (quantization index modulation, QIM) method for watermark embedding and a multiplication embedding method for watermark embedding.

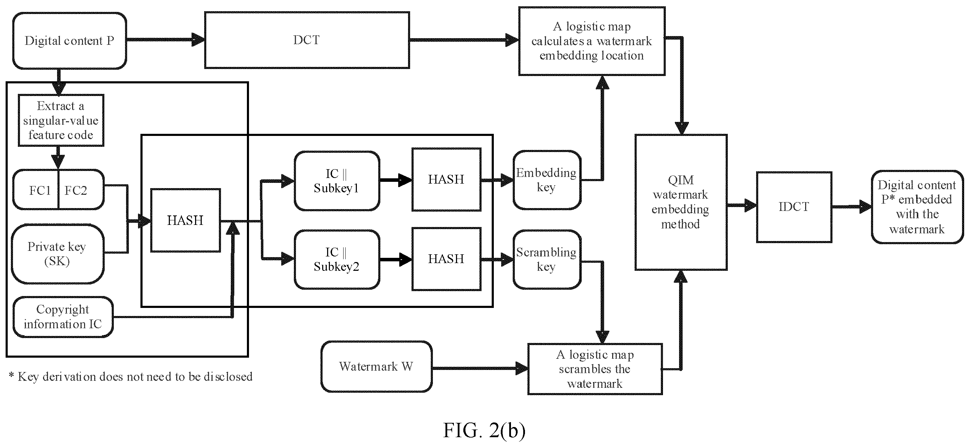

The method for processing digital content in this embodiment of this application may also be referred to as a watermark embedding solution for digital content (for a process of embedding a copyright watermark, refer to FIG. 2(b)). By using a method for deriving an embedding key and a scrambling key by combining copyright information of digital content and a private key of a user with a content feature of the digital content, a one-way function, for example, a HASH function, is added to key derivation in a watermarking scheme, to build security of a copyright watermark based on a collision-resistant capability of the HASH function. This improves security of using the copyright watermark.

For the watermark embedding scheme for digital content, an embodiment of this application further provides a method for confirming a copyright of digital content. A verifier obtains an intermediate key. The verifier binds at least the intermediate key to obtain an encryption key. The verifier extracts, by using the encryption key, a to-be-verified copyright watermark from digital content embedded with a copyright watermark. The verifier determines ownership of the digital content based on the to-be-verified copyright watermark.

In an embodiment, an attester provides a first subkey Subkey1, a second subkey Subkey2, and copyright information for a verifier. The verifier outputs an embedding key and a scrambling key by using the first subkey and the copyright information, and the second subkey and the copyright information as input for a one-way function (for example, a HASH function) respectively. The verifier extracts, based on the embedding key and the scrambling key, a copyright watermark from digital content embedded with the copyright watermark, and determines ownership of the digital content based on copyright information carried in the copyright watermark, to confirm a copyright of the digital content.

To be specific, during copyright verification, a user submits a Subkey1 and a Subkey2 output by a key derivation algorithm (namely, the 1^{st} HASH function shown in FIG. 2(b)), and the user needs to store only a private key SK of the user. This reduces a key storage amount and improves security.

In addition, the watermark embedding scheme for digital content in this embodiment of this application can resist forged-key-based interpretation attacks, and has higher robustness.

For example, when obtaining digital content P* embedded with a watermark, a copyright thief may calculate an embedding key based on copyright information of the copyright thief and a forged Subkey1 by using a disclosed one-way function (for example, a HASH function), extract some forged-key-based watermark information from the digital content, and then forge a related scrambling key according to a watermark scrambling rule of a disclosed algorithm, so that a watermark sign corresponding to the copyright information of the copyright thief can be obtained by transforming the watermark information. In this way, the copyright thief obtains a watermark embedding key and a watermark scrambling key based on the forged Subkey1 and the copyright information IC of the copyright thief. However, a Subkey2, to be specific, input for a HASH algorithm, that needs to be provided for a verification authority cannot be calculated based on the scrambling key. Similarly, a copyright thief cannot calculate corresponding IC or a corresponding Subkey1 based on a forged Subkey2. Therefore, an attacker can only attempt to remove watermark information through indiscriminate destroy attacks, but cannot directly steal a copyright. Any disclosed watermark algorithm cannot resist such attacks.

To ensure security of copyright information of digital content, an embodiment of this application further provides a dual-watermarking scheme for digital content. Evidence watermark information is added to metadata of digital content embedded with a copyright watermark, to ensure a capability of confirming a copyright of information of the digital content itself when the copyright watermark is subject to an attack that exceeds an upper limit of robustness of the copyright watermark. Therefore, strong binding between digital content and copyright information is implemented in different cases.

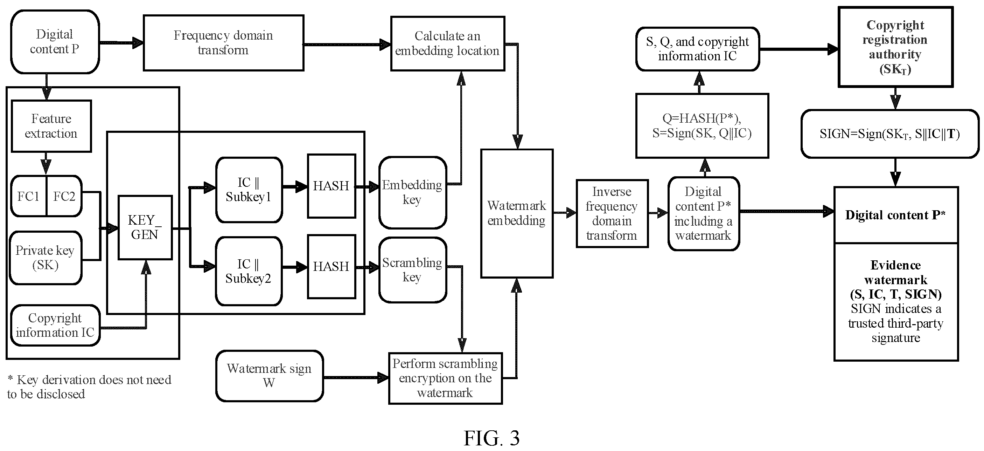

FIG. 3 is a diagram of an implementation process of a dual-watermarking scheme for digital content.

A user side extracts a feature from digital content, and then extracts two key features FC1 and FC2 from the feature. The feature extracted from the digital content may be a digital fingerprint feature or other stable information, so that information can still be extracted after the digital content is watermarked or attacked.

The user side performs calculation through a key derivation algorithm KEY_GEN by using the FC1, the FC2, and a copyright key SK of a user as input: Subkey1=KEY_GEN(SK, FC1), and Subkey2=KEY_GEN(SK, FC2). A specific KEY_GEN algorithm is selected by the user side, and may be a standard encryption algorithm AES, a hash HASH algorithm, or the like.

The user side calculates a watermark embedding key through a disclosed standard HASH algorithm by using the Subkey1, the Subkey2, and copyright information IC as follows: HASH(IC∥Subkey1); and calculates a watermark scrambling key as follows: HASH(IC∥Subkey2).

The user side performs scrambling encryption on a watermark sign by using the watermark scrambling key to obtain watermark information that needs to be embedded, calculates an embedding location for a watermark in a frequency domain coefficient matrix of digital content P by using the embedding key, embeds the watermark information into the calculated location in the frequency domain coefficient matrix based on a watermark embedding algorithm, and performs inverse frequency domain transform to obtain digital content P* embedded with the watermark.

The user side calculates a hash value Q of P*, signs the Q and the copyright information IC, and then sends a signature result S, the hash value Q, and the copyright information IC to a copyright registration authority for evidence registration, to bind an evidence watermark to the digital content P* embedded with the watermark.

The copyright registration authority receives an evidence storage request from the user side, signs the S, the IC, and a timestamp T after signature verification succeeds, and sends a signature result SIGN and corresponding signature information to the user.

After receiving the information and successfully verifying a signature, the user uses related information (S, IC, T, and SIGN) as an evidence watermark for the digital content P*.

It can be understood that a copyright watermark is embedded into the digital content in a hidden manner, and the evidence watermark is associated with and bound to the digital content. For example, the evidence watermark is packaged together with the digital content and is propagated together with the digital content. To be specific, the evidence watermark exists as data related to the digital content, complete digital content data includes digital content embedded with the copyright watermark and the data related to the digital content, and the evidence watermark is a part of the data related to the digital content.

For the dual-watermarking scheme for digital content, an embodiment of this application further provides a corresponding method for confirming a copyright of digital content. If a verifier extracts no copyright watermark from digital content embedded with a copyright watermark, the verifier obtains an evidence watermark, extracts copyright information from the evidence watermark, and determines ownership of the digital content based on the copyright information.

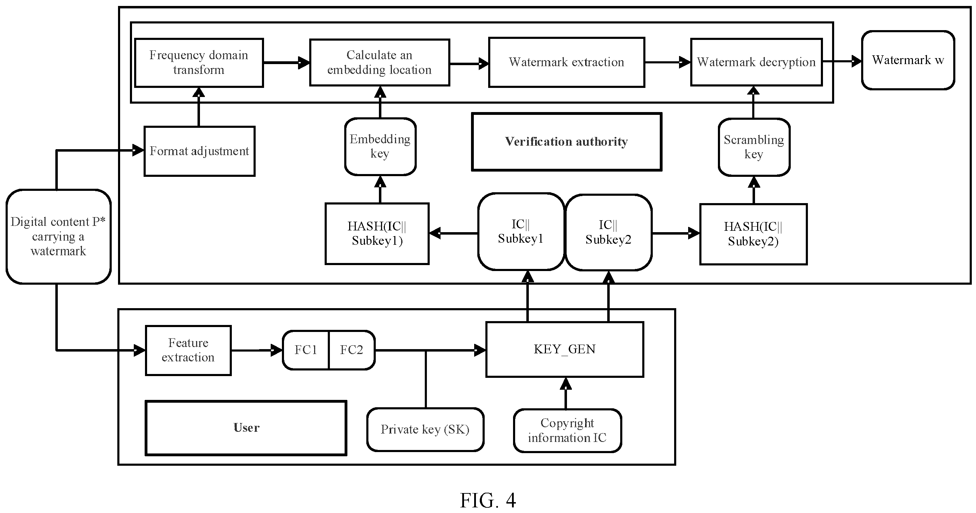

For a process of extracting a copyright watermark by a verifier, refer to FIG. 4. A user sends a Subkey1, a Subkey2, and copyright information IC to a verifier (verification authority) as copyright evidence. The verification authority calculates a watermark embedding key and a watermark scrambling key respectively as follows: HASH(IC| | Subkey 1) and HASH(IC| | Subkey2). The verification authority extracts a copyright watermark from digital content P* by using the watermark embedding key and the watermark scrambling key based on a disclosed watermarking scheme, and verifies whether the copyright watermark belongs to a user declared in the IC.

When the copyright watermark is destroyed by an attack, to be specific, when no copyright watermark is extracted from digital content embedded with a copyright watermark, the verification authority obtains an evidence watermark, extracts copyright information from the evidence watermark, and determines ownership of the digital content based on the extracted copyright information.

For example, when the verification authority extracts no copyright watermark information from digital content, the verification authority obtains an evidence watermark associated with the digital content, extracts (S, IC, SIGN) from the evidence watermark, calculates Sign.ver(VK1, S, HASH(P*)) and Sign.ver(VKT, SIGN, S∥IC∥T), and verifies whether Sign.ver(VK1, S, HASH(P*)) and Sign.ver(VKT, SIGN, S∥IC∥T) are correct. If Sign.ver(VK1, S, HASH(P*)) and Sign.ver(VKT, SIGN, S∥IC∥T) are correct, the verification succeeds, and the verification authority determines that copyright information in the evidence watermark is correctly generated. In this case, the verification authority confirms a copyright by using the copyright information extracted from the evidence watermark.

When the evidence watermark is also attacked, to be specific, no copyright information can be extracted from the evidence watermark, parties related to a copyright dispute need to upload digital content. Evidence watermarks are respectively extracted from the digital content uploaded by the parties related to the copyright dispute. Timestamps are extracted from the evidence watermarks corresponding to the digital content uploaded by the parties related to the copyright dispute. Evidence storage time of the digital content of the parties related to the copyright dispute is determined based on the timestamps. It is determined that a user corresponding to digital content with earlier evidence storage time is a copyright owner of the digital content.

According to the dual-watermarking scheme provided in this embodiment of this application, when an attack attempted by an attacker against digital content exceeds an upper limit of robustness and a copyright consequently cannot be confirmed based on copyright watermark content obtained by running a watermark extraction algorithm, if evidence watermark information carried in the digital content is not modified, an evidence watermark can be verified, and copyright information can be extracted from the evidence watermark, it can be proved that the digital content held by the attacker is stolen digital content. If the evidence watermark of the digital content is also modified, a user needs to provide original digital content that carries the evidence watermark, and a copyright is confirmed based on evidence information and evidence storage time.

The dual-watermarking scheme provided in this embodiment of this application further includes the evidence watermark. To be specific, an absolute guarantee is added to a watermark-based copyright confirmation capability through evidence storage. This is of great significance to final copyright confirmation in actual application.

In the case of an infringement resulting from an exact copy, an evidence storage system may quickly confirm a copyright through simple calculation. However, a connection between evidence and digital content is a weak connection, and the digital content itself does not include copyright information. If the digital content is modified by a thief, a copyright confirmation process may include a complex litigation process. In the dual-watermarking scheme provided in this embodiment of this application, an evidence storage capability and a strong binding capability are combined. In a simple copy infringement, a copyright may be confirmed based on digital fingerprint detection or copyright information stored as evidence. Under an attack within a robustness capability of the watermarking scheme, a copyright may be confirmed by extracting a copyright watermark. Under an attack exceeding an upper limit of robustness of a watermark, a copyright may be confirmed based on evidence information.

Therefore, the dual-watermarking scheme provided in this embodiment of this application provides better protection than a common watermark, and provides a more comprehensive and more extensive copyright confirmation capability than an evidence storage system.

To implement tracing of digital content, an embodiment of this application further provides a method for processing digital content. The method may also be referred to as a method for binding digital content, copyright information, and a tracing credential. The method includes: first obtaining digital content embedded with a copyright watermark; and then binding a tracing credential to the digital content. The tracing credential includes tracing information and a verifiable credential. The tracing information is metadata related to the digital content, and includes a digest of the digital content or the like as a basic material for tracing. The verifiable credential is a signature obtained by using a private key of a user and a digest generated based on the tracing information.

A solution for binding a tracing credential to digital content is as follows: A digest of digital content embedded with a copyright watermark is calculated to obtain a first digest. Digest calculation is performed on tracing information by using the first digest as a part of the tracing information, to obtain a second digest. A user signs the second digest based on a private key of the user to obtain a verifiable credential. The tracing information and the verifiable credential constitute a tracing credential.

Optionally, a specific implementation of calculating a digest of digital content embedded with a copyright watermark may be hashing. For example, the digital content embedded with the copyright watermark is hashed to obtain a hash value of the digital content embedded with the copyright watermark. The hash value is the digest of the digital content embedded with the copyright watermark.

In this embodiment of this application, a copyright watermark is embedded into digital content to implement strong binding between a copyright and the digital content, and a tracing credential is bound to the digital content based on a signature key of a user. Therefore, copyright information, the tracing credential, and the digital content are bound, and an attacker cannot unbind them. Even if the digital content is stolen, a supervisor can easily determine copyright ownership and determine an original thief through tracing based on the copyright information and the tracing credential.

Optionally, the copyright information of the digital content further includes an evidence watermark. To be specific, the digital content may be digital content obtained through processing based on the dual-watermarking scheme. In this way, the digital content is bound to the evidence watermark.

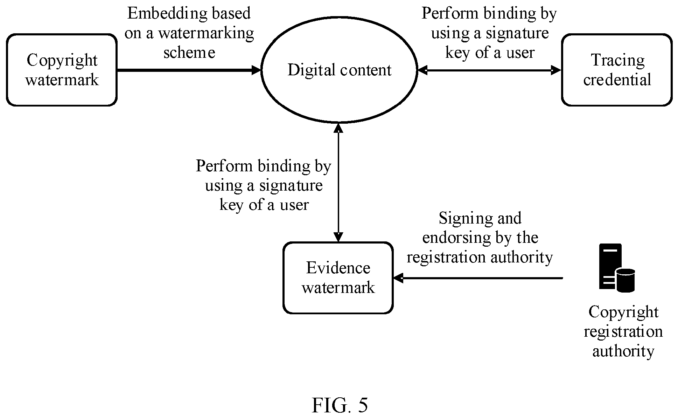

FIG. 5 is a diagram of binding digital content, copyright information, and a tracing credential. The copyright information of the digital content includes a copyright watermark and an evidence watermark. The copyright watermark is embedded into the digital content by using the watermark embedding scheme provided in embodiments of this application to implement strong binding. The evidence watermark signed and endorsed by a registration authority is bound by using a signature key of a user. Tracing information may include some details of the digital content, an identity of a creator, and other information. The tracing information is bound to the digital content based on a signature key of the user. In this way, copyright information is associated with each other, and the copyright information and the tracing credential are bound to the digital content.

In an example, in addition to a digest of the digital content, the tracing information further includes a preview of the digital content and/or related information of the user (for example, an identity of the user). A verifiable credential is obtained by the user by signing a digest of the tracing information by using a private signature key of the user. The digital content is bound to the tracing credential based on a hash of the digital content that is stored in the tracing information and a signature scheme used in the verifiable credential.

Optionally, when a copyright owner of the digital content authorizes another user to re-create or propagate the digital content, the another user further generates a second tracing credential for created digital content. A first tracing credential is generated for the copyright owner of the digital content. The second tracing credential is generated for a grantee of the digital content or for processing the digital content. The second tracing credential includes a digest of the first tracing credential, so that the second tracing credential is bound to the first tracing credential.

In another example, the tracing information includes authorization information, and the authorization information includes an authorization credential and an authorization signature. The authorization credential proves that authorization on the digital content is obtained. The authorization signature is obtained by signing the authorization credential by the copyright owner of the digital content. The authorization information may also be used as tracing information. In other words, the tracing information may also include the authorization information.

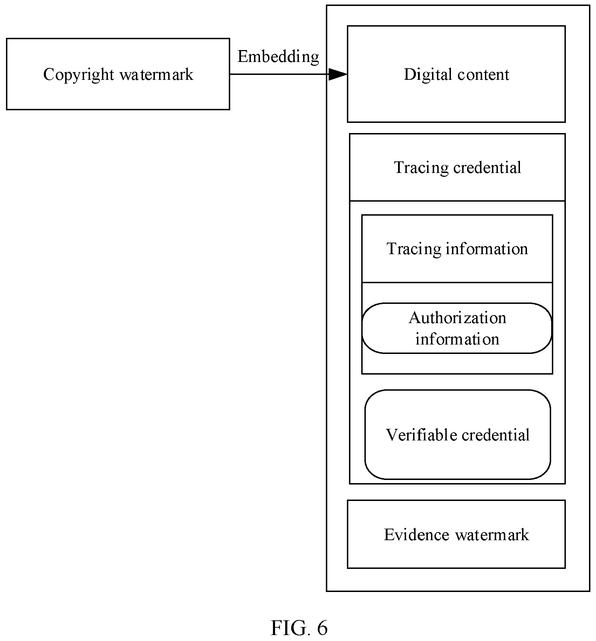

As shown in FIG. 6, complete digital content data includes data obtained by packaging digital content embedded with a copyright watermark, a tracing credential, and an evidence watermark. The tracing credential includes tracing information and a verifiable credential. The tracing information includes authorization information. Certainly, in another example, the digital content embedded with the copyright watermark, the tracing credential, and the evidence watermark may alternatively not be packaged together. However, the tracing credential and the evidence watermark need to be associated with the digital content embedded with the copyright watermark, to ensure that the tracing credential and the evidence watermark of the digital content can be invoked based on the digital content embedded with the copyright watermark.

For digital content obtained through processing by using the method for binding digital content, copyright information, and a tracing credential, an embodiment of this application further provides a method for tracing digital content. The method includes: obtaining digital content; determining, based on the digital content, a tracing credential associated with and bound to the digital content; and tracing the digital content based on the tracing credential.

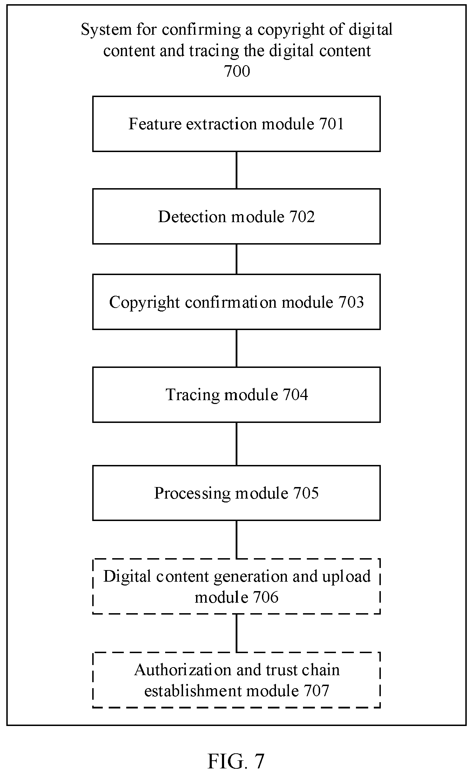

An embodiment of this application further provides a system for confirming a copyright of digital content and tracing the digital content. As shown in FIG. 7, the system 700 for confirming a copyright of digital content and tracing the digital content includes at least:
a feature extraction module 701, configured to extract a feature of digital content;
a detection module 702, configured to compare the extracted feature of the digital content with a feature in a feature database to determine whether the feature database includes a feature similar to the feature of the digital content;
a copyright confirmation module 703, configured to extract copyright information of the digital content, and determine ownership of the digital content based on the copyright information;
a tracing module 704, configured to extract a tracing credential of the digital content, and trace the digital content based on the tracing credential to determine infringing digital content; and
a processing module 705, configured to perform corresponding handling on an owner of the infringing digital content, and/or remove digital content from a trust chain to which the infringing digital content belongs.

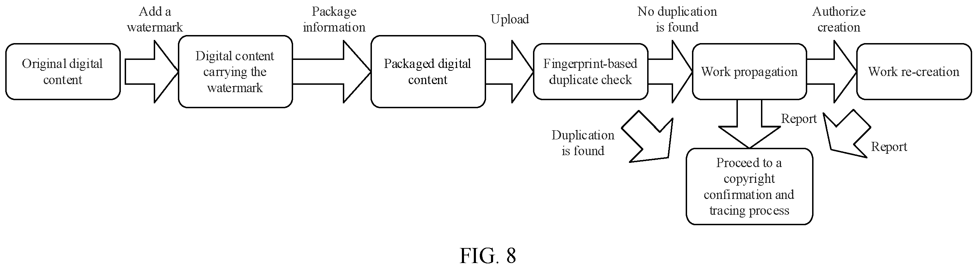

For example, after a user uploads digital content, the feature extraction module 701 in the system extracts a feature of the digital content, for example, extracts a digital fingerprint feature of the digital content. Then the detection module 702 performs duplicate check on the extracted digital fingerprint feature, to be specific, searches a fingerprinting database for a fingerprint similar to the extracted fingerprint feature, for example, calculates a similarity between the digital fingerprint feature extracted from the digital content and each fingerprint feature stored in the fingerprinting database. If a fingerprint feature with a similarity exceeding a specific threshold (for example, 0.9) is found, it is considered that the fingerprinting database includes a fingerprint feature similar to the digital fingerprint feature extracted from the digital content, and it is considered that the fingerprinting database includes a feature that is the same as the feature extracted from the digital content. If the fingerprinting database includes a digital fingerprint similar to the digital fingerprint extracted from the digital content, a copyright confirmation and tracing process is performed. To be specific, the copyright confirmation module 703 extracts copyright information of the digital content, and determines ownership of the digital content based on the copyright information. Then the tracing module 704 extracts a tracing credential of the digital content, and traces the digital content based on the tracing credential to obtain an infringing digital content work and all digital content on the trust chain. The processing module 705 performs handling on an owner of the infringing digital content, and/or removes digital content from the trust chain to which the infringing digital content belongs. If no duplicate digital fingerprint is found, the digital content may be propagated, and another user may be authorized, through an authorization and trust chain mechanism, to re-create the propagated digital content. After any digital content in the system is reported by a user, a copyright confirmation and tracing process is performed (refer to FIG. 8).

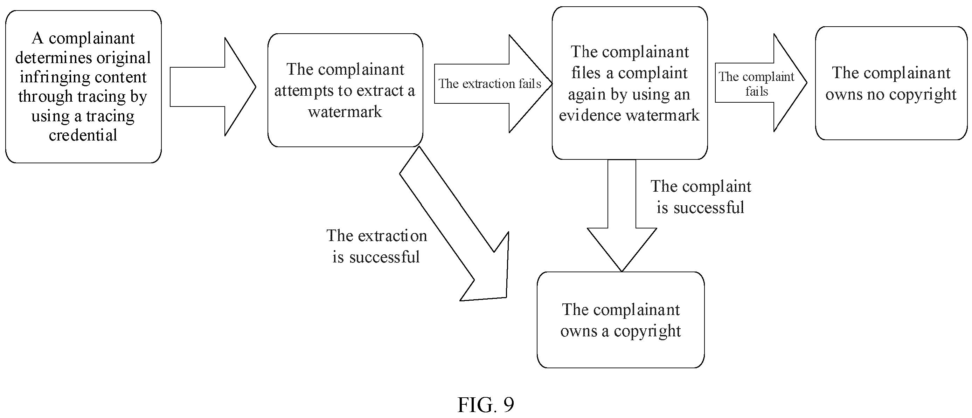

For a copyright confirmation and tracing process, refer to FIG. 9. A complainant (a reporter or a content creator who finds duplication during a fingerprint-based duplicate check) determines original infringing digital content through tracing by using a tracing credential bound to digital content involved in a dispute. The complainant submits a watermark verification key, so that the system extracts a copyright watermark of the complainant from original infringing digital content. If the extraction is successful, the complainant is a copyright owner. If the extraction fails, the complainant may continue to file a complaint based on an evidence watermark. If the complaint is successful, the complainant is a copyright owner. Otherwise, the complaint fails. The system performs handling on a thief and digital content on a related benefit chain based on a complaint result.

In an example, the system 700 for confirming a copyright of digital content and tracing the digital content further includes a digital content generation and upload module 706. In this module, a user processes digital content according to the foregoing method for processing digital content to embed a copyright watermark into the digital content bind the digital content to a tracing credential, performs verification on processed digital content, and uploads the digital content to the system if the verification succeeds.

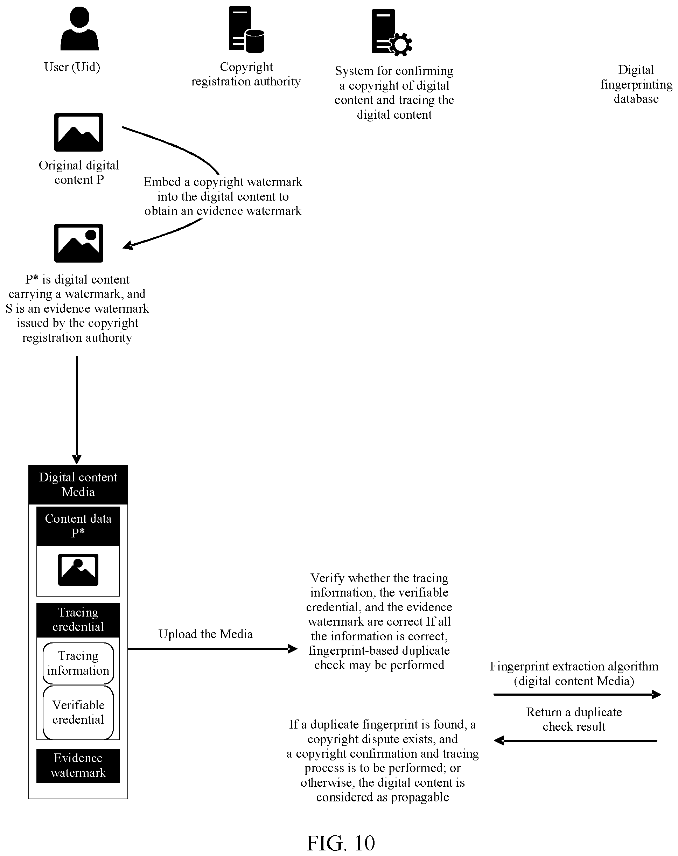

FIG. 10 shows generation and uploading of digital content. As shown in FIG. 10, a copyright watermark may be embedded into digital content based on the foregoing embedding scheme for digital content. In addition, an evidence watermark is obtained from a copyright registration authority, and the evidence watermark is bound to the digital content by using the foregoing dual-watermarking scheme for digital content. Tracing information is generated for the digital content. The tracing information needs to include a digest of the digital content data, and may further include a preview of the digital content, a user ID, and other information related to the digital content, such as an editing operation and detailed information about a generation device. A link is generated for each entry in the tracing information, and a digest is calculated for the entry. Then these links and digests are signed as a whole, and the content constitutes a verifiable credential. The tracing information and the verifiable credential are combined into a tracing credential. Finally, the tracing credential and the evidence watermark are attached to digital content data to constitute complete digital content. A user uploads the complete digital content to the system. The system checks whether content in the tracing credential is correctly generated and whether a signature of the copyright registration authority in the evidence watermark is correct. The system extracts a digital fingerprint of the digital content data, and submits the digital fingerprint to a digital fingerprinting database for a duplicate check. If no duplicate fingerprints are found, the digital content can be propagated. Otherwise, a copyright confirmation and tracing process is performed.

In an example, the system 700 for confirming a copyright of digital content and tracing the digital content further includes an authorization and trust chain establishment module 707, configured to: generate authorization information in response to an authorization request; process re-created digital content according to the method for processing digital content in embodiments of this application to determine second digital content data; and determine third digital content data based on the authorization information and second digital content.

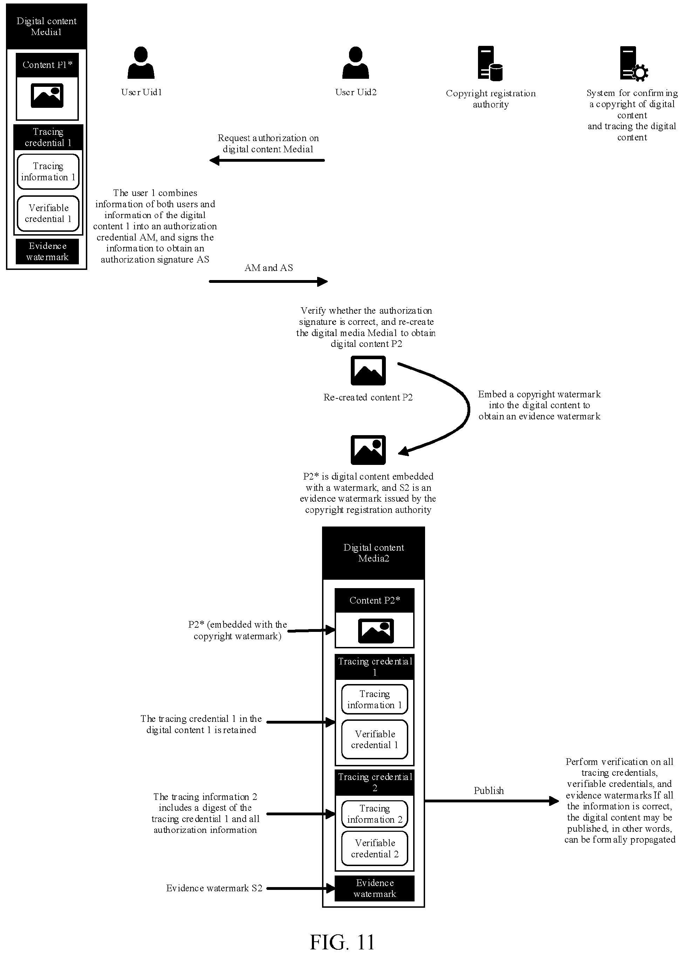

As shown in FIG. 11, a specific implementation process of establishing a digital content authorization and trust chain on the system for confirming a copyright of digital content and tracing the digital content is as follows:
1. When a user 2 wants to obtain creation authorization on digital content 1 from a user 1, the user 2 first sends a message for requesting authorization on the digital content 1 to the user 1.
2. The user 1 generates authorization information AM based on identities of both users and information of the digital content 1, and then signs a hash value of the authorization information to obtain an authorization signature AS.
3. The user 1 sends the authorization information and the authorization signature to the user 2.
4. The user 2 re-creates the digital content 1 to generate digital content P2.
5. The user 2 embeds a copyright watermark into digital content 2 by using a watermarking scheme to obtain content P2* embedded with the watermark, and obtains an evidence watermark S2 from a copyright registration authority. For a specific implementation, refer to the descriptions of FIG. 3.
6. A tracing credential of the digital content 1 is retained in the digital content 2. In addition, the user 2 generates new tracing information 2 based on authorization information that includes a digital digest of the content data P2* of the digital content 2, a digital digest of a tracing credential 1, an authorization credential A, and the authorization signature AS, information about the user 2, a specific re-creation operation, and the like. Then the user 2 generates a verifiable credential 2 for the tracing information 2. The tracing information 2 and the verifiable credential 2 constitute a tracing credential 2 of the digital content 2.
7. The content P2* embedded with the copyright watermark, the tracing credential 1, the tracing credential 2, and the evidence watermark constitute final digital content 2.
8. The user 2 submits the digital content 2 to a copyright protection system.
9. The system performs review:
   (1) Is the tracing information 2 correctly generated? Are a credential and a signature of authorization information in the tracing information 2 correct?
   (2) Are a digest in the verifiable credential 2 and an overall signature 2 are correctly generated?
   (3) Is the evidence watermark correct?

If all the items are correct, the digital content 2 can be formally propagated.

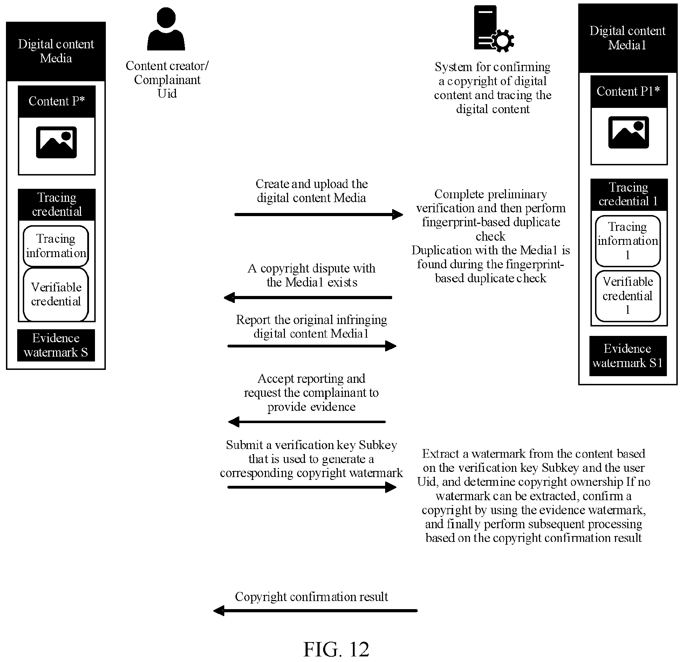

FIG. 12 shows an implementation of copyright confirmation and tracing for a copyright dispute found through fingerprint detection.
1. A complainant (digital content creator) creates original digital content data and submits the original digital content data to the system for confirming a copyright of digital content and tracing the digital content.
2. The system identifies a copyright dispute through a duplicate check in a fingerprinting database, and notifies the complainant of digital content that may be involved in the copyright dispute.
3. If the complainant considers that the digital content infringes a copyright of the complainant, the complainant reports the infringing digital content to a protection system.
4. The system accepts the reporting and requests the complainant to provide evidence.
5. The complainant submits a verification key Subkey (including two parts: a Subkey1 and a Subkey2) that is used to generate a corresponding copyright watermark.
6. The system calculates watermark extraction keys by using the verification key Subkey and copyright information IC (the copyright information IC may be, for example, a complainant ID) as follows: HASH(IC∥Subkey1) and HASH(IC∥Subkey2); and extracts a watermark from the reported digital content. For a specific watermark extraction process, refer to FIG. 4. If a watermark of the complainant can be extracted, the complainant owns a copyright, and the system performs handling on an owner of original infringing digital content Media1, and removes all infringing digital content on the trust chain. If no copyright watermark can be extracted, the system parses out a timestamp T from an evidence watermark S of data content submitted by the complainant. Then the system compares the timestamp T with a timestamp T1 in an evidence watermark S1 in the digital content Medial. If T is earlier than T1, a complaint result is that the complainant owns a copyright, and the system performs handling on the owner of the original infringing digital content Media1, and removes all infringing digital content on the trust chain. If T is later than T1, the compliant of the complainant fails.

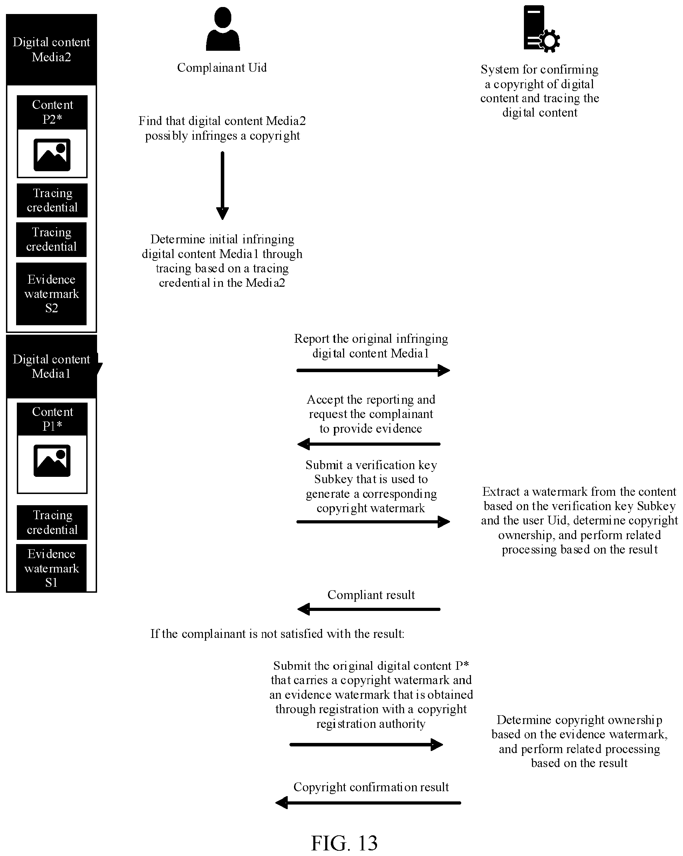

FIG. 13 shows an implementation of copyright confirmation and tracing for a copyright dispute resulting from reporting by a user.
1. A complainant determines, through tracing, initial possible infringing digital content Medial based on a tracing credential in digital content Media2 that may be involved in a dispute and that is found by the complainant, and reports the digital content to the system.
2. The system requests the complainant to provide evidence. In this case, the complainant provides a verification key Subkey of the complainant to the system based on a watermarking scheme.
3. The system calculates watermark extraction keys by using the verification key Subkey and copyright information IC (the copyright information IC may be, for example, a complainant ID) as follows: HASH(IC∥Subkey1) and HASH(IC∥Subkey2); and extracts a watermark from the reported digital content. For a specific watermark extraction process, refer to FIG. 4. If a watermark of the complainant can be extracted, the complainant owns a copyright, and the system performs handling on an owner of the original infringing digital content Medial (this part of information is included in tracing information in a tracing credential 1), and removes all infringing digital content on the trust chain. If no copyright watermark can be extracted, the system determines that the complainant fails. Finally, the system sends a complaint result to the complainant.
4. If the complainant is not satisfied with the result, the complainant files a complaint by submitting original digital content P* that carries a copyright watermark and an evidence watermark S that is obtained through registration with a copyright registration authority.
5. The system verifies whether the evidence watermark S is correct. If the evidence watermark S is correct, the system compares a timestamp T in the evidence watermark S with a timestamp T1 in an evidence watermark S1 in the digital content Medial. If T is earlier than T1, the compliant result is that the complainant owns a copyright, and the system performs handling on the owner of the original infringing digital content Medial (this part of information is included in the tracing information in the tracing credential 1), and removes all infringing digital content on the trust chain. If T is later than T1, the compliant of the complainant fails.

According to the system for confirming a copyright of digital content and tracing the digital content in this embodiment of this application, the following problem is resolved: Media platforms use different DCI numbers, and a copyright cannot be confirmed when digital content is stolen across platforms. The system can accurately confirm a copyright across platforms based on double guarantees of a copyright watermark and an evidence watermark, provided that a qualified copyright registration authority is used.

Specific security analysis is as follows: A complainant submits a verification key Subkey in a first complaint, and the system attempts to extract a watermark from digital content involved in a dispute. The system extracts a watermark based on the verification key and copyright information IC. Therefore, based on correctness and security of a watermarking scheme, the system extracts a watermark of the complainant if the watermark is not destroyed, to confirm a copyright. However, the system cannot extract a watermark if watermark information is lost due to massive tampering with the digital content. In this case, the complainant may provide an evidence watermark obtained through initial registration with a copyright registration authority as a basis for the complaint. The digital content Medial involved in a dispute also has an evidence watermark. The evidence watermark is generated by signing, by the copyright registration authority, digital content data and a timestamp by using a private key of the authority during registration. Therefore, an attacker cannot forge such an evidence watermark without a private signature key of the copyright registration authority. Therefore, the system may determine, based on timestamp information in the evidence watermark, a user who has applied for a copyright earlier. In this way, a copyright confirmation function is implemented.

Based on a trust chain mechanism, an original copyright thief is accurately determined through tracing, and an entire infringement chain is identified.

Specific security analysis is as follows: When a complainant finds infringing digital content Media2, the complainant may quickly learn of, based on a tracing credential in the Media2, an initial version of the digital content and all operations performed for modifying the digital content and propagating the digital content to current digital content. The security herein is based on a mechanism of an authorization trust chain. Because all tracing credentials in the Media2 include related information of each piece of digital content on the chain and authorization information, it is difficult for an attacker to forge any step in the chain. Specifically, as shown in FIG. 13, because tracing information 2 in a tracing credential 2 includes a digital digest of digital content data P2* of the Media2, the tracing information 2 and the P2* are bound to each other. A verifiable credential 2 in the tracing credential 2 includes a digital digest of each entry in the tracing information 2 and includes digital signatures of a user for these digests. Therefore, the entire tracing credential 2 is bound to the P2* based on the tracing information 2, and a signature verification algorithm may be used for verification. In addition, an evidence watermark also includes a signature obtained by the user by signing the digital digest of the digital content P2* embedded with a watermark. Based on security of a signature scheme, an attacker cannot forge such a signature. In this way, all parts of the digital content Media2 are bound based on the signature scheme and a digital digest scheme. Similarly, data, a tracing credential, and an evidence watermark in each piece of digital content are bound together and cannot be separately tampered with. In addition, because the tracing information 2 includes a digital digest of the tracing credential 1 of the Medial and an authorization signature AS obtained by signing an authorization credential AM by an authorizer, an authorization-based strong binding relationship is established between the re-created work Media2 and the original work Media1. To be specific, an attacker cannot forge an original work Media1' of the Media2, and the attacker cannot forge authorization on the Medial. In this way, an entire trust chain is fully bound together, and each step cannot be tampered with. Therefore, based on the trust chain, an original infringer (a creator of the Medial) found by the complainant is definitely true. In other words, an original infringer definitely can be determined through tracing.

The copyright registration authority is responsible only for registration and does not participate in copyright confirmation querying, and therefore has small computing load.

The copyright registration authority participates in neither a copyright confirmation process nor a tracing process. Therefore, the authority only needs to perform signature during registration, and has small computing load.

Based on a copyright watermarking scheme, in most scenarios, the system can still provide copyright evidence for disputes on copyrights that are not registered with a same copyright registration authority, to confirm a copyright.

Even if two parties of a dispute are not registered with a same copyright registration authority, based on correctness of the copyright watermarking scheme, if one party can extract its own copyright watermark from digital content of the other party, this may indicate that the party is a copyright owner. In this way, a copyright is confirmed.

An embodiment of this application further provides a computing device, including at least one processor, a memory, and a communication interface. The processor is configured to perform the methods in FIG. 1 to FIG. 13.

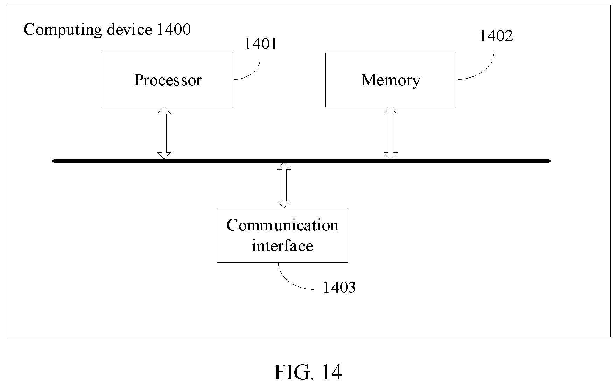

FIG. 14 is a diagram of a structure of a computing device according to an embodiment of this application.

As shown in FIG. 14, the computing device 1400 includes at least one processor 1401, a memory 1402, and a communication interface 1403. The processor 1401, the memory 1402, and the communication interface 1403 are communicatively connected. The communicative connection may be implemented in a wired manner (for example, by using a bus) or in a wireless manner. The communication interface 1403 is configured to receive data (for example, digital content data) sent by another device. The memory 1402 stores computer instructions. The processor 1401 executes the computer instructions to perform the method in the foregoing method embodiments.

The computing device 1400 may be a device with a computing capability, for example, a terminal or a server. For example, the terminal may be a personal computer or a smartphone, and the server may be an X86 server.

The system for confirming a copyright of digital content and tracing the digital content in embodiments of this application is deployed on the computing device 1400, to confirm a copyright of digital content and trace the digital content.

It should be understood that, in this embodiment of this application, the processor 1401 may be a central processing unit CPU, or the processor 1401 may be another general purpose processor, a digital signal processor (digital signal processor, DSP), or an application-specific integrated circuit (application-specific integrated circuit, ASIC), a field programmable gate array (field programmable gate array, FPGA) or another programmable logic device, a discrete gate or transistor logic device, a discrete hardware component, or the like. The general purpose processor may be a microprocessor, any conventional processor, or the like.

The memory 1402 may include a read-only memory and a random access memory, and provide instructions and data for the processor 1401. The memory 1402 may further include a nonvolatile random access memory.

The memory 1402 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. By way of example but not limitative description, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be understood that the computing device 1400 according to this embodiment of this application may perform and implement the methods shown in FIG. 1 to FIG. 13 in embodiments of this application. For detailed descriptions of implementations of the methods, refer to the foregoing descriptions. For brevity, details are not described herein again.

An embodiment of this application provides a computer-readable storage medium. The computer-readable storage medium stores a computer program. When the computer program is executed by a processor, the foregoing methods are implemented.

An embodiment of this application provides a chip. The chip includes at least one processor and an interface. The at least one processor determines program instructions or data by using the interface. The at least one processor is configured to execute the program instructions to implement the foregoing methods.

An embodiment of this application provides a computer program or a computer program product. The computer program or the computer program product includes instructions. When the instructions are executed, a computer is enabled to perform the foregoing methods.

A person of ordinary skill in the art may be further aware that, in combination with the examples described in embodiments disclosed in this specification, units and algorithm steps can be implemented by electronic hardware, computer software, or a combination thereof. To clearly describe interchangeability between hardware and software, the foregoing generally describes compositions and steps of the examples based on functions. Whether the functions are performed by hardware or software depends on particular applications and design constraints of technical solutions. A person of ordinary skill in the art may use different methods to implement the described functions for each particular application, but it should not be considered that the implementation goes beyond the scope of this application.

The steps of the methods or algorithms described in the embodiments disclosed in this specification may be implemented by hardware and a software module executed by the processor or a combination of hardware and a software module executed by the processor. The software module may be configured in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.
In the foregoing specific implementations, the objective, technical solutions, and beneficial effects of this application are further described in detail. It should be understood that the foregoing descriptions are merely specific implementations of this application, but are not intended to limit the protection scope of this application. Any modification, equivalent replacement, or improvement made without departing from the principle of this application shall fall within the protection scope of this application.

## Claims

1. A method for processing digital content, comprising:
obtaining (S1) digital content;
performing (S2) feature extraction on the digital content to obtain a digital content feature;
generating (S3) an intermediate key based on at least the digital content feature and secret information of a user;
processing (S4) the intermediate key using at least a one-way function to obtain an encryption key; and
embedding (S5) a watermark of the digital content into the digital content based on the encryption key.

2. The method for processing digital content according to claim 1, wherein the digital content feature comprises a first digital content feature and a second digital content feature, and the secret information of the user comprises first secret information and second secret information;
the generating an intermediate key based on at least the digital content feature and secret information of a user comprises:
obtaining a first intermediate key based on the first digital content feature and the first secret information, and obtaining a second intermediate key based on the second digital content feature and the second secret information;
the binding at least the intermediate key to obtain an encryption key comprises:
binding at least the first intermediate key to obtain a first encryption key, and binding at least the second intermediate key to obtain a second encryption key; and
the embedding a watermark of the digital content into the digital content based on the encryption key comprises:
determining an embedding location for the watermark in the digital content based on the first encryption key, encrypting the watermark based on the second encryption key, and embedding the encrypted watermark into the embedding location in the digital content.

3. The method for processing digital content according to claim 2, wherein the encryption key is further obtained through binding based on user information.

4. The method according to any one of claims 1 to 3, further comprising: binding the digital content embedded with the watermark to an evidence watermark, wherein the evidence watermark comprises copyright information.

5. The method according to claim 4, wherein the binding the digital content embedded with the watermark to an evidence watermark comprises:
performing digest calculation on the digital content embedded with the watermark to determine a first digest; and
signing the first digest and the copyright information based on a private key of the user to determine a first signature.

6. The method according to claim 5, wherein the evidence watermark further comprises the first signature, a second signature, and a timestamp;
the second signature is obtained by signing, by a copyright registration authority, the first signature, the copyright information, and the timestamp after signature verification on the first signature succeeds; and
the timestamp comprises information about time at which the copyright registration authority completes the second signature.

7. The method according to claim 5 or 6, wherein the first digest is a hash value of the digital content embedded with the watermark.

8. A method for confirming a copyright of digital content, comprising:
obtaining, by a verifier, an intermediate key;
processing, by the verifier, the intermediate key using at least a one-way function to obtain an encryption key;
extracting, by the verifier by using the encryption key, a to-be-verified watermark from digital content embedded with a watermark, wherein the digital content embedded with the watermark comprises a copyright watermark embedded based on an encryption key, the encryption key is obtained by processing an intermediate key by using a one-way function, and the intermediate key is generated according to a digital content feature and secret information of a user; and; the digital content feature is extracted from the digital content; and
determining, by the verifier, ownership of the digital content based on the to-be-verified watermark.

9. A computing device, comprising a memory and a processor, wherein the memory stores executable code, and the processor executes the executable code to implement the method according to any one of claims 1 to 8.

10. A computer-readable storage medium, wherein the computer-readable storage medium stores a computer program, and when the computer program is executed on a computer, the computer is enabled to perform the method according to any one of claims 1 to 8.

## Patentansprüche

1. Verfahren zum Verarbeiten digitaler Inhalte, umfassend:
Erlangen (S1) digitaler Inhalte;
Durchführen (S2) einer Merkmalsextraktion aus den digitalen Inhalten, um ein Merkmal digitaler Inhalte zu erlangen;
Generieren (S3) eines Zwischenschlüssels basierend auf mindestens dem Merkmal digitaler Inhalte und geheimen Informationen eines Benutzers;
Verarbeiten (S4) des Zwischenschlüssels unter Verwendung von mindestens einer Einwegfunktion, um einen Verschlüsselungsschlüssel zu erlangen; und
Einbetten (S5) eines Wasserzeichens der digitalen Inhalte in die digitalen Inhalte basierend auf dem Verschlüsselungsschlüssel.

2. Verfahren zum Verarbeiten digitaler Inhalte nach Anspruch 1, wobei das Merkmal digitaler Inhalte ein erstes Merkmal digitaler Inhalte und ein zweites Merkmal digitaler Inhalte umfasst, und die geheimen Informationen des Benutzers erste geheime Informationen und zweite geheime Informationen umfassen;
das Generieren eines Zwischenschlüssels basierend auf mindestens dem Merkmal digitaler Inhalte und geheimen Informationen eines Benutzers Folgendes umfasst:
Erlangen eines ersten Zwischenschlüssels basierend auf dem ersten Merkmal digitaler Inhalte und den ersten geheimen Informationen, und Erlangen eines zweiten Zwischenschlüssels basierend auf dem zweiten Merkmal digitaler Inhalte und den zweiten geheimen Informationen;
das Binden mindestens des Zwischenschlüssels, um einen Verschlüsselungsschlüssel zu erlangen, Folgendes umfasst:
Binden mindestens des ersten Zwischenschlüssels, um einen ersten Verschlüsselungsschlüssel zu erlangen, und Binden mindestens des zweiten Zwischenschlüssels, um einen zweiten Verschlüsselungsschlüssel zu erlangen; und
das Einbetten eines Wasserzeichens der digitalen Inhalte in die digitalen Inhalte basierend auf dem Verschlüsselungsschlüssel Folgendes umfasst:
Bestimmen einer Einbettungsstelle für das Wasserzeichen in den digitalen Inhalten basierend auf dem ersten Verschlüsselungsschlüssel, Verschlüsseln des Wasserzeichens basierend auf dem zweiten Verschlüsselungsschlüssel, und Einbetten des verschlüsselten Wasserzeichens in die Einbettungsstelle in den digitalen Inhalten.

3. Verfahren zum Verarbeiten digitaler Inhalte nach Anspruch 2, wobei der Verschlüsselungsschlüssel ferner durch Binden basierend auf Benutzerinformationen erlangt wird.

4. Verfahren nach einem der Ansprüche 1 bis 3, ferner umfassend: Binden der digitalen Inhalte, die mit dem Wasserzeichen eingebettet sind, an ein Beweiswasserzeichen, wobei das Beweiswasserzeichen Urheberrechtsinformationen umfasst.

5. Verfahren nach Anspruch 4, wobei das Binden der digitalen Inhalte, die mit dem Wasserzeichen eingebettet sind, an ein Beweiswasserzeichen Folgendes umfasst:
Durchführen einer Digest-Berechnung an den digitalen Inhalten, die mit dem Wasserzeichen eingebettet sind, um einen ersten Digest zu bestimmen; und
Signieren des ersten Digests und der Urheberrechtsinformationen basierend auf einem privaten Schlüssel des Benutzers, um eine erste Signatur zu bestimmen.

6. Verfahren nach Anspruch 5, wobei das Beweiswasserzeichen ferner die erste Signatur, eine zweite Signatur und einen Zeitstempel umfasst;
die zweite Signatur durch Signieren der ersten Signatur, der Urheberrechtsinformationen und des Zeitstempels durch eine Urheberrechtsregistrierungsbehörde erlangt wird, nachdem die Signaturprüfung der ersten Signatur erfolgreich war; und
der Zeitstempel Informationen über den Zeitpunkt, zu welchem die Urheberrechtsregistrierungsbehörde die zweite Signatur geleistet hat, umfasst.

7. Verfahren nach Anspruch 5 oder 6, wobei der erste Digest ein Hash-Wert der digitalen Inhalte ist, die mit dem Wasserzeichen eingebettet sind.

8. Verfahren zum Bestätigen des Urheberrechts an digitalen Inhalten, umfassend:
Erlangen eines Zwischenschlüssels durch eine Prüfstelle;
Verarbeiten des Zwischenschlüssels durch die Prüfstelle unter Verwendung von mindestens einer Einwegfunktion, um einen Verschlüsselungsschlüssel zu erlangen;
Extrahieren eines zu prüfenden Wasserzeichens aus digitalen Inhalten, die mit einem Wasserzeichen eingebettet sind, durch die Prüfstelle unter Verwendung des Verschlüsselungsschlüssels, wobei die digitalen Inhalte, die mit dem Wasserzeichen eingebettet sind, ein Urheberrechtswasserzeichen umfassen, das basierend auf einem Verschlüsselungsschlüssel eingebettet ist, der Verschlüsselungsschlüssel durch Verarbeiten eines Zwischenschlüssels unter Verwendung einer Einwegfunktion erlangt wird und der Zwischenschlüssel gemäß einem Merkmal digitaler Inhalte und geheimen Informationen eines Benutzers generiert wird; und das Merkmal digitaler Inhalte aus den digitalen Inhalten extrahiert wird; und
Bestimmen des Eigentums an den digitalen Inhalten durch die Prüfstelle basierend auf dem zu prüfenden Wasserzeichen.

9. Rechenvorrichtung, umfassend einen Speicher und einen Prozessor, wobei der Speicher einen ausführbaren Code speichert und der Prozessor den ausführbaren Code ausführt, um das Verfahren nach einem der Ansprüche 1 bis 8 zu implementieren.

10. Computerlesbares Speichermedium, wobei das computerlesbare Speichermedium ein Computerprogramm speichert und, wenn das Computerprogramm auf einem Computer ausgeführt wird, der Computer in die Lage versetzt wird, das Verfahren nach einem der Ansprüche 1 bis 8 durchzuführen.

## Revendications

1. Procédé de traitement de contenu numérique, comprenant :
l'obtention (S1) de contenu numérique ;
la réalisation (S2) d'une extraction de caractéristique sur le contenu numérique pour obtenir une caractéristique du contenu numérique ;
la génération (S3) d'une clé intermédiaire sur la base au moins de la caractéristique de contenu numérique et d'informations secrètes d'un utilisateur ;
le traitement (S4) de la clé intermédiaire à l'aide d'au moins une fonction à sens unique pour obtenir une clé de chiffrement ; et
l'intégration (S5) d'un filigrane du contenu numérique dans le contenu numérique sur la base de la clé de chiffrement.

2. Procédé de traitement de contenu numérique selon la revendication 1, dans lequel la caractéristique de contenu numérique comprend une première caractéristique de contenu numérique et une seconde caractéristique de contenu numérique, et les informations secrètes de l'utilisateur comprennent des premières informations secrètes et des secondes informations secrètes ;
la génération d'une clé intermédiaire sur la base au moins de la caractéristique de contenu numérique et d'informations secrètes d'un utilisateur comprend :
l'obtention d'une première clé intermédiaire sur la base de la première caractéristique de contenu numérique et les premières informations secrètes, et l'obtention d'une seconde clé intermédiaire sur la base de la seconde caractéristique de contenu numérique et les secondes informations secrètes ;
la liaison au moins de la clé intermédiaire pour obtenir une clé de chiffrement comprend :
la liaison au moins de la première clé intermédiaire pour obtenir une première clé de chiffrement, et la liaison au moins de la seconde clé intermédiaire pour obtenir une seconde clé de chiffrement ; et
l'intégration d'un filigrane du contenu numérique dans le contenu numérique sur la base de la clé de chiffrement comprend : la détermination d'un emplacement d'intégration pour le filigrane dans le contenu numérique sur la base de la première clé de chiffrement, le chiffrement du filigrane sur la base de la seconde clé de chiffrement et l'intégration du filigrane chiffré à l'emplacement d'intégration dans le contenu numérique.

3. Procédé de traitement de contenu numérique selon la revendication 2, dans lequel la clé de chiffrement est en outre obtenue par liaison sur la base des informations de l'utilisateur.

4. Procédé selon l'une quelconque des revendications 1 à 3, comprenant en outre : la liaison du contenu numérique intégrant le filigrane à un filigrane de preuve, dans lequel le filigrane de preuve comprend des informations de droit d'auteur.

5. Procédé selon la revendication 4, dans lequel la liaison du contenu numérique intégrant le filigrane à un filigrane de preuve comprend :
la réalisation d'un calcul de condensé sur le contenu numérique intégrant le filigrane afin de déterminer un premier condensé ; et
la signature du premier condensé et des informations de droits d'auteur sur la base d'une clé privée de l'utilisateur afin de déterminer une première signature.

6. Procédé selon la revendication 5, dans lequel le filigrane de preuve comprend en outre la première signature, une seconde signature et un horodatage ;
la seconde signature est obtenue par la signature, par une autorité d'enregistrement des droits d'auteur, de la première signature, des informations de droits d'auteur et de l'horodatage après vérification réussie de la première signature ; et
l'horodatage comprend des informations sur le moment où l'autorité d'enregistrement des droits d'auteur appose la seconde signature.

7. Procédé selon la revendication 5 ou 6, dans lequel le premier condensé est une valeur de hachage du contenu numérique intégrant le filigrane.

8. Procédé de confirmation d'un droit d'auteur sur un contenu numérique, comprenant :
l'obtention, par un vérificateur, d'une clé intermédiaire ;
le traitement, par le vérificateur, de la clé intermédiaire à l'aide d'au moins une fonction à sens unique pour obtenir une clé de chiffrement ; et
l'extraction, par le vérificateur à l'aide de la clé de chiffrement, d'un filigrane à vérifier à partir d'un contenu numérique comportant un filigrane, dans lequel le contenu numérique intégrant le filigrane comprend un filigrane de droit d'auteur intégré sur la base d'une clé de chiffrement, la clé de chiffrement est obtenue par le traitement d'une clé intermédiaire à l'aide d'une fonction à sens unique, et la clé intermédiaire est générée sur la base d'une caractéristique du contenu numérique et d'informations secrètes d'un utilisateur ; et ; la caractéristique de contenu numérique est extraite du contenu numérique ; et
la détermination, par le vérificateur, de la propriété du contenu numérique sur la base du filigrane à vérifier.

9. Dispositif informatique comprenant une mémoire et un processeur, dans lequel la mémoire stocke un code exécutable, et le processeur exécute le code exécutable pour mettre en œuvre le procédé selon l'une quelconque des revendications 1 à 8.

10. Support de stockage lisible par ordinateur, dans lequel le support de stockage lisible par ordinateur stocke un programme informatique, et lorsque le programme informatique est exécuté sur un ordinateur, l'ordinateur est activé pour réaliser le procédé selon l'une quelconque des revendications 1 à 8.
